# EUROPEAN PATENT APPLICATION

(11) **EP 4 465 186 A1**
(43) Date of publication of application: **20.11.2024**
(21) Application number: 23752327.9
(22) Date of filing: 07.02.2023
(51) Int. Cl.: G06F 16/22, G06F 11/14

(54) **DATA PROCESSING SYSTEM AND METHOD, AND DEVICE**

(30) Priority: 14.02.2022 CN 202210135308; 21.04.2022 CN 202210423419
(71) Applicant: Huawei Technologies Co., Ltd., Shenzhen, Guangdong 518129 (CN)
(72) Inventor: YANG, Xingkun, Shenzhen, Guangdong 518129 (CN); CHEN, Keyun, Shenzhen, Guangdong 518129 (CN)
(74) Representative: MERH-IP Matias Erny Reichl Hoffmann Patentanwälte PartG mbB
(86) International application number: PCT/CN2023/074702
(87) International publication number: WO 2023/151547

(57) **Abstract**

A data processing system and method, and a device are provided. A storage device stores a data copy in a form of a data backup chain. The data backup chain records data copies in the storage device in a time sequence of backing up the data copies to the storage device. Any data access instance has a data access function, and the data access instance can process a data access request. The data access instance may perform a data backup, and back up data in storage space of the data access instance to the storage device as a data copy in the data backup chain. With support of the storage device, the data access instance further has a data disaster recovery function and a data tiering function. The data processing system supports one or more multi-copy technologies, and the storage device stores the data copy only in the form of the data backup chain, and does not need to store a plurality of data backup chains. This can effectively reduce storage resource occupation.

## Description

### CROSS-REFERENCE TO RELATED APPLICATIONS

This application claims priorities to Chinese Patent Application No. 202210135308.1, filed with the China National Intellectual Property Administration on February 14, 2022 and entitled "SYSTEM AND METHOD FOR INTEGRATING DISASTER RECOVERY, BACKUP, AND TIERING", and to Chinese Patent Application No. 202210423419.2, filed with the China National Intellectual Property Administration on April 21, 2022 and entitled "DATA PROCESSING SYSTEM AND METHOD, AND DEVICE", which are incorporated herein by reference in their entireties.

### TECHNICAL FIELD

This application relates to the field of communication technologies, and in particular, to a data processing system and method, and a device.

### BACKGROUND

With development of technologies, various data multi-copy technologies emerge in the storage field, such as a data disaster recovery backup, a data tiering backup, and a data backup.

Disaster recovery means that when a "disaster" occurs on a node in a storage system and the node cannot continue providing a service, another node that has performed a data disaster recovery backup may replace the node on which the "disaster" occurs to continue to provide the service. A disaster recovery mechanism requires that the node in the storage system backs up a data copy for the disaster recovery to the another node.

Data tiering means that data is tiered into hot data, warm data, and cold data based on data access frequency. The node in the storage system may back up, to a remote node or a cloud node, a data copy of data (such as the warm data and the cold data) that is not frequently accessed, and only store the hot data locally. This backup manner is referred to as the data tiering backup.

The foregoing data backup means a common data backup, to be specific, the node in the storage system may back up locally stored data to another node, and form a data copy on the another node. When the locally stored data is damaged or lost, the node may use the data copy on the another node to perform recovery.

In the storage field, different data multi-copy technologies are independent of each other. To achieve different technical purposes, a user needs to use different multi-copy technologies. For example, a data copy is generated for a purpose of the disaster recovery, a data copy is generated for a purpose of the data tiering, and a data copy is generated for another purpose. Storing these copies causes a large quantity of storage resources to be occupied.

### SUMMARY

This application provides a data processing system and method, and a device, to resolve a resource waste caused by a multi-copy technology.

According to a first aspect, an embodiment of this application provides a data processing system. The data processing system includes a plurality of storage devices. A first storage device, a second storage device, and a third storage device in the plurality of storage devices are used as examples for description herein.

In the data processing system, the first storage device has a data storage function, and the first storage device stores a data copy. In the first storage device, the data copy is stored in a form of a data backup chain. The data backup chain records data copies in the first storage device in a time sequence of backing up the data copies to the first storage device.

The second storage device has a data access function. The second storage device can receive a data access request and process the data access request, where the data access request is used to request to access data. After receiving the data access request, the second storage device accesses data in storage space of the second storage device based on the data access request. The storage space of the second storage device refers to a cache that can be used by the second storage device to directly read the data. The storage space may be a storage component of the second storage device, such as a memory or a hard disk drive, or may be storage software deployed on the second storage device, such as a file system, or may be storage software deployed on another device.

In addition to processing the data access request, the second storage device may further perform a data backup. When performing the data backup, the second storage device backs up the data in the storage space to the first storage device. Data backed up by the second storage device each time is used as one data copy in the data backup chain in the first storage device.

The data processing system also supports a part or all of the following operations.

### (1) Data disaster recovery

When the second storage device is faulty, a third storage device can replace the faulty second storage device to implement the data access function and process the data access request. When processing the data access request, the third storage device accesses the data copy in the first storage device based on the data access request. The data copy is backed up to the first storage device by the faulty second storage device before a fault occurs.

### (2) Data tiering

When the data tiering is implemented, data may be tiered, for example, tiered into a plurality of types of data such as low-level data and high-level data. A data tiering manner is not limited in this embodiment of this application. For example, the tiering is performed based on data access frequency, and the low-level data is data whose data access frequency is lower than a threshold. The high-level data is data whose data access frequency is higher than the threshold. For another example, the tiering is performed based on a data type. The low-level data is data of a voice type, and the high-level data is data of a picture type or a video type. A granularity of the data tiering is not limited in this embodiment of this application. For example, data is tiered by using a block as a granularity, or data is tiered by object or file. In this embodiment of this application, an example in which the low-level data is cold data and the high-level data is hot data is used for description. A manner of processing the cold data and a manner of processing the hot data are also applicable to the plurality of types of data such as the low-level data and the high-level data that are based on another data tiering manner and granularity.

When the cold data (low-level data) exists in the data in the storage space of the second storage device, and the cold data is already included in the data copy backed up to the first storage device, the second storage device deletes the cold data in the storage space of the second storage device, and retains the hot data (high-level data) in the second storage device. The second storage device stores location information of the cold data in the storage space, where the location information of the cold data indicates a storage location of the cold data in the first storage device.

According to the foregoing system, the storage device in the data processing system not only implements a data backup function, but also implements a data disaster recovery or data tiering function. When the data processing system is ensured to support various multi-copy technologies, the data copy is stored only in the form of one data backup chain and it does not need to store a plurality of data backup chains. In other words, a plurality of functions are implemented by storing only one set of copies, instead of storing copies respectively for implementing the functions. Therefore, storage resource occupation can be effectively reduced.

In a possible implementation, when replacing the faulty second storage device to process the data access request, the third storage device may further perform a data backup. The third storage device backs up data in storage space of the third storage device to the first storage device, where data backed up by the third storage device each time is used as one data copy in the data backup chain. In other words, when processing the data access request, the third storage device backs up the data in the storage space of the third storage device to the first storage device.

According to the foregoing system, when the second storage device implements the data disaster recovery function, the second storage device further performs the data backup, to ensure that data stored by the second storage device when the second storage device processes the data access request can be stored in the first storage device.

In a possible implementation, for the faulty second storage device in the data processing system, after the fault of the second storage device is rectified, a second storage device after the fault is rectified can obtain, from the data backup chain, the data copy backed up by the third storage device, and restore the data in the storage space of the second storage device by using the obtained data copy.

According to the foregoing system, after the fault is rectified, the faulty second storage device can restore the data in the storage space of the second storage device by using the data copy stored in the first storage device, to ensure that the second storage device after the fault is rectified can continue to support data access.

In a possible implementation, after the second storage device converts the cold data into the hot data, the second storage device restores the data in the storage space of the second storage device by using the cold data in the data copy backed up to the first storage device. For example, the second storage device obtains the cold data from the first storage device, and stores the cold data in the storage space of the second storage device.

According to the foregoing system, after the cold data is converted into the hot data, the second storage device re-stores the hot data in the storage space of the second storage device, to ensure that the second storage device can efficiently access the hot data.

In a possible implementation, when the data in the storage space of the second storage device is damaged or lost, the second storage device obtains the data copy from the data backup chain, and recovers the damaged or lost data by using the obtained data copy.

According to the foregoing system, because the second storage device has performed the data backup, when the data in the storage space is damaged or lost, the second storage device uses the data copy in the first storage device to perform data recovery in time.

In a possible implementation, when backing up the data in the storage space of the second storage device to the first storage device, the second storage device may back up the data copy in a full backup manner. To be specific, the second storage device backs up the data in the storage space of the second storage device to the first storage device in a full data manner, and data backed up each time is used as one data copy in the data backup chain, in other words, the data backed up each time is all data in the storage space. The second storage device may alternatively perform an incremental backup. To be specific, the second storage device backs up the data in the storage space of the second storage device to the first storage device in a data increment manner, and data backed up each time is used as one data copy in the data backup chain, in other words, the data backed up each time is data written into the storage space after a previous backup.

According to the foregoing system, the second storage device performs the data backup in different backup manners. The backup manners are flexible and applicable to different application scenarios.

In a possible implementation, in the data processing system, a storage device may have only a data storage function. For example, the storage device is only configured to store the data copy. A storage device may alternatively have only the data access function. For example, the storage device processes the data access request, and implements the data disaster recovery or data tiering function. A storage device may alternatively have both the data storage device and the data access function.

The first storage device, the second storage device, and the third storage device mentioned in the foregoing descriptions are used as examples. The first storage device, the second storage device, and the third storage device may be deployed in the following forms.
1. The first storage device, the second storage device, and the third storage device are different devices.
2. The first storage device and the second storage device are a same device, and the third storage device is different from the second storage device.
3. The first storage device and the third storage device are a same device, and the second storage device is different from the third storage device.
4. The second storage device and the third storage device are a same device, and the first storage device is different from the third storage device.
   It should be noted that, when the second storage device and the third storage device are the same device, it is understood as that the device is logically divided into two parts, one part is used to implement a function of the third storage device, and the other part is used to implement a function of the second storage device. That the second storage device is faulty mentioned in the foregoing descriptions is understood as that the part used to implement the function of the second storage device is faulty, and the part used to implement the function of the third storage device is not affected, that is, not faulty. For example, two virtual machines are both deployed on one computing device, one virtual machine performs an operation of the second storage device mentioned in the foregoing descriptions, and the other virtual machine performs an operation of the third storage device mentioned in the foregoing descriptions. That the second storage device is faulty mentioned in the foregoing descriptions means that one of the virtual machines is faulty.
5. The first storage device, the second storage device, and the third storage device are a same device.

It should be noted that, that the first storage device, the second storage device, and the third storage device are a same device is similar to that the second storage device and the third storage device are a same device. To be specific, one device is logically divided into three parts, and the three parts are respectively used to implement functions of the first storage device, the second storage device, and the third storage device.

In a possible implementation, the second storage device in the data processing system supports data access based on one or more protocols, that is, a received data access protocol is generated based on one or more protocols. The protocol includes a part or all of the following: a POSIX protocol, an NFS, an SMB protocol, and an HDFS.

According to the foregoing system, the storage device can support multi-protocol data access, so that the data processing system is applicable to a plurality of scenarios.

In a possible implementation, the storage device in the data processing system further has a data analysis function. For example, the second storage device obtains the data copy or data in the data copy from the first storage device, and performs an analysis operation on the obtained data copy or data in the data copy, where the analysis operation includes a part or all of the following: query and statistics collection. Query refers to querying for data that meets a condition. Statistics collection refers to collecting, through statistics, a quantity of data that meets the condition.

According to the foregoing system, a data access instance has a plurality of functions, and an application scope of the data processing system is effectively extended.

According to a second aspect, an embodiment of this application provides a data processing method. The method is performed by a data access instance deployed on a storage device. For beneficial effects, refer to the related descriptions of the first aspect. To facilitate distinguishing between different data access instances deployed on one or more storage devices, a first data access instance and a second data access instance are used as examples for description herein. In the method, the first data access instance receives a data access request, and accesses data in storage space of the first data access instance based on the data access request. The storage space of the first data access instance is similar to the storage space of the second storage device mentioned above, and may be understood as a hardware component, or may be understood as storage software such as a file system.

The first data access instance may further have a data backup function, in other words, the first data access instance backs up the data in the storage space of the first data access instance to the storage device. The storage device stores a data copy in a form of a data backup chain, the data backup chain records, in a backup time sequence, data copies backed up to the storage device, and data backed up by the first data access instance each time is used as one data copy in the data backup chain.

The data processing method further includes a part or all of the following.

### (1) Data disaster recovery

When the first data access instance is faulty, the second data access instance replaces the first data access instance to implement a data access function and process the data access request. When processing the data access request, the second data access instance accesses the data copy in the storage device based on the data access request.

### (2) Data tiering

When cold data in the storage space of the first data access instance is already included in the data copy backed up to the storage device, the first data access instance deletes the cold data in the storage space of the first data access instance. For example, the first data access instance stores location information of the cold data in the storage space of the first data access instance, where the location information of the cold data indicates a storage location of the cold data in the storage device.

In a possible implementation, when replacing the first data access instance, the second data access instance backs up data in storage space of the second data access instance to the storage device, where data backed up by the second data access instance each time is used as one data copy in the data backup chain. The data in the storage space is data stored in the storage space of the second data access instance when the second data access instance replaces the first data access instance.

In a possible implementation, after the fault of the first data access instance is rectified, the first data access instance obtains the data copy backed up by the second data access instance in the data backup chain, and restores the data in the storage space of the first data access instance by using the obtained data copy.

In a possible implementation, when the first data access instance converts the cold data to hot data, the first data access instance restores the data in the storage space of the first data access instance by using the cold data in the data copy backed up to the storage device. For example, the first data access instance obtains the cold data from the storage device, and stores the cold data in the storage space of the first data access instance.

In a possible implementation, when the data in the storage space of the first data access instance is damaged or lost, the first data access instance further obtains the data copy from the data backup chain, and recovers the damaged or lost data by using the obtained data copy.

In a possible implementation, when the first data access instance backs up the data in the storage space of the first data access instance to the storage device, a part or all of the following manners are used.

### (1) Incremental backup

The first data access instance backs up the data in the storage space of the first data access instance to the storage device in a data increment manner, and data backed up each time is used as one data copy in the data backup chain.

### (2) Full backup

The first data access instance backs up the data in the storage space of the first data access instance to the storage device in a full data manner, and data backed up each time is used as one data copy in the data backup chain.

In a possible implementation, a deployment manner of the first data access instance and the second data access instance is flexible. The following lists several deployment manners.
1. The first data access instance and the second data access instance are deployed on a device other than the storage device. A device on which the first data access instance is deployed is different from a device on which the second data access instance is deployed.
2. The first data access instance and the second data access instance are deployed on a device other than the storage device. A device on which the first data access instance is deployed is the same as a device on which the second data access instance is deployed.
3. The first data access instance and the second data access instance are deployed on the storage device.
4. The first data access instance is deployed on the storage device, and the second data access instance is deployed on a device other than the storage device.
5. The second data access instance is deployed on the storage device, and the first data access instance is deployed on a device other than the storage device.

In a possible implementation, the first data access instance is a virtual machine or a container, and the second data access instance is a virtual machine or a container.

In a possible implementation, the data access request is based on a part or all of the following protocols: a POSIX protocol, an NFS, an SMB protocol, and an HDFS.

In a possible implementation, the first data access instance obtains the data copy or data in the data copy from the storage device, and performs an analysis operation on the obtained data copy or data in the data copy, where the analysis operation includes a part or all of the following: query and statistics collection.

According to a third aspect, an embodiment of this application provides a data processing method. The method is performed by a storage device. For beneficial effects, refer to the related descriptions of the first aspect. The storage device stores a data copy in a form of a data backup chain, where the data backup chain records, in a backup time sequence, data copies that are backed up to the storage device. In the method:

Under control of a first data access instance, the storage device backs up data in storage space of the first data access instance to the storage device, where data backed up by the first data access instance each time is used as one data copy in the data backup chain. For example, the first data access instance sends a backup request to the storage device, where the backup request is used to request to back up the data, and the backup request carries the data in the storage space of the first data access instance. After the storage device receives the backup request, the storage device stores, in the storage device based on the backup request, the data carried in the backup request as the data copy.

When the first data access instance is faulty, a second data access instance is used as a disaster recovery instance of the first data access instance, and the storage device receives a request (for example, a data request) from the second data access instance. The data request is used to request data. Upon request of the second data access instance, the storage device feeds back, to the second data access instance, data backed up by the first data access instance to the storage device, where the data is the data copy in the data backup chain or data in the data copy.

In a possible implementation, under control of the second data access instance, the storage device backs up data in storage space of the second data access instance to the storage device, where data backed up by the second data access instance each time is used as one data copy in the data backup chain.

In a possible implementation, when damaged or lost data exists in the storage space of the first data access instance, or after a fault of the first data access instance is rectified, the first data access instance requests the data copy or the data in the data copy from the storage device. The storage device feeds back the data in the storage device to the first data access instance upon request of the first data access instance.

In a possible implementation, the data copy backed up by the first data access instance to the storage device each time is a part or all of the following:
all data in the storage space of the first data access instance; or
data written into the storage space of the first data access instance after a previous backup.

In a possible implementation, a deployment manner of the first data access instance, the second data access instance, and the storage device is flexible. The following lists several deployment manners.
1. The first data access instance and the second data access instance are deployed on a device other than the storage device. A device on which the first data access instance is deployed is different from a device on which the second data access instance is deployed.
2. The first data access instance and the second data access instance are deployed on a device other than the storage device. A device on which the first data access instance is deployed is the same as a device on which the second data access instance is deployed.
3. The first data access instance and the second data access instance are deployed on the storage device.
4. The first data access instance is deployed on the storage device, and the second data access instance is deployed on a device other than the storage device.
5. The second data access instance is deployed on the storage device, and the first data access instance is deployed on a device other than the storage device.

According to a fourth aspect, an embodiment of this application further provides a storage device. The storage device has a function of implementing behavior of the storage device in the method instance in the third aspect. For beneficial effects, refer to the descriptions of the first aspect. Details are not described herein again. The function may be implemented by hardware, or may be implemented by executing corresponding software by the hardware. The hardware or the software includes one or more units that correspond to the foregoing functions. In a possible design, a structure of a data access instance includes a storage unit and a processing unit. These units may perform corresponding functions in the method example in the third aspect. For details, refer to the detailed descriptions in the method example. Details are not described herein again.

According to a fifth aspect, an embodiment of this application further provides a computing device, where the computing device includes a processor and a storage. The storage stores computer program instructions, the processor is coupled to the storage, and the processor may invoke computer-executable instructions stored in the storage, to perform the method in the second aspect and the possible implementations of the second aspect, or perform the method in the third aspect and the possible implementations of the third aspect.

According to a sixth aspect, this application further provides a computer-readable storage medium. The computer-readable storage medium stores instructions. When the instructions are run on a computer, the computer is enabled to perform the method in the second aspect and the possible implementations of the second aspect, or the computer is enabled to perform the method in the third aspect and the possible implementations of the third aspect.

According to a seventh aspect, this application further provides a computer program product including instructions. When the computer program product runs on a computer, the computer is enabled to perform the method in the second aspect and the possible implementations of the second aspect, or the computer is enabled to perform the method in the third aspect and the possible implementations of the third aspect.

According to an eighth aspect, this application further provides a computer chip. The chip is connected to a storage, and the chip is configured to read and execute a software program stored in the storage, to perform the method in the second aspect and the possible implementations of the second aspect, or perform the method in the third aspect and the possible implementations of the third aspect.

### BRIEF DESCRIPTION OF DRAWINGS

FIG. 1 is a diagram of an architecture of a data processing system according to this application;
FIG. 2A to FIG. 2C are diagrams of structures of data backup chains according to this application;
FIG. 3 to FIG. 5 are diagrams of data processing methods according to this application;
FIG. 6 is a diagram of a structure of a data access instance according to this application; and
FIG. 7 is a diagram of a structure of a computing device according to this application.

### DESCRIPTION OF EMBODIMENTS

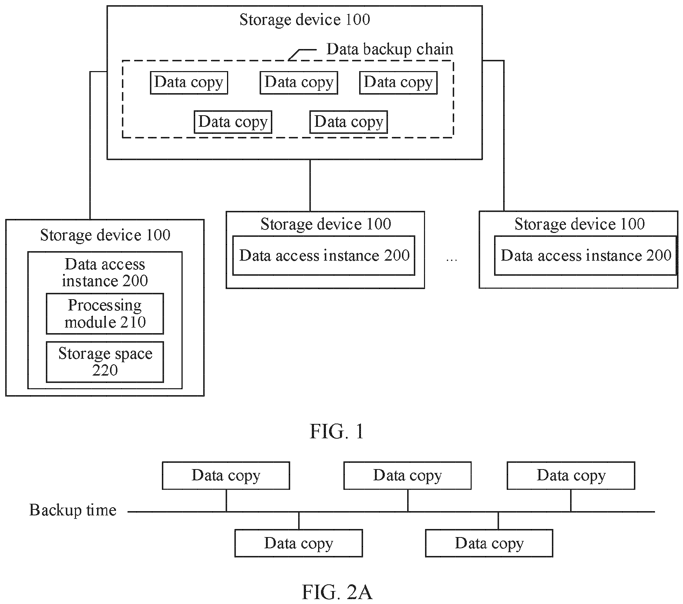

FIG. 1 shows a data processing system according to an embodiment of this application. The data processing system includes a plurality of storage devices 100. A data access instance 200 can be deployed on a part or all of the plurality of storage devices 100.

At least one storage device 100 in the plurality of storage devices 100 may be configured to store a data copy. The data copy is data that is backed up to the storage device 100 by the data access instance 200 deployed on the storage device in the data processing system. One data copy is data that is backed up to the storage device 100 for one time by the data access instance 200 deployed on the storage device in the data processing system. As shown in FIG. 2A, in this embodiment of this application, the storage device 100 stores the data copy in a form of a data backup chain. In other words, the storage device 100 establishes, based on a backup time sequence, data copies that are backed up to the storage device 100. The data copies form one data backup chain based on backup time. As the time elapses, the data backup chain further records data copies that are backed up to the storage device 100.

The storage device 100 configured to store the data copy can store, under control of the data access instance 200, data in storage space of the data access instance 200 in the data backup chain as a data copy in the data backup chain.

The storage device 100 may further feed back the data or the data copy in the data backup chain to the data access instance 200 upon request of the data access instance 200.

For example, one data access instance 200 backs up data in storage space of the data access instance 200 to the storage device 100; and when damaged or lost data exists in the storage space of the data access instance 200, the data access instance 200 requests, from the storage device, the data copy or the data in the data copy that is backed up to the storage device 100. The requested data copy or data is used to recover the damaged or lost data in the storage space of the data access instance 200.

For another example, when one data access instance 200 is faulty, another data access instance 200 serves as a disaster recovery instance of the faulty data access instance 200, and replaces the data access instance 200 to implement a data access function. When the data access instance 200 serving as the disaster recovery instance implements the data access function and needs to access data, the data access instance 200 accesses the data copy that is backed up to the storage device 100 before the faulty data access instance 200 is faulty. In other words, the data access instance 200 serving as the disaster recovery instance requests, from the storage device 100, the data copy or the data in the data copy that is backed up to the storage device 100 by the faulty data access instance 200.

A length of the data backup chain is not limited in this embodiment of this application. For example, the data backup chain may be infinitely long, and the data backup chain extends infinitely, and records an infinite quantity of data copies. For another example, the data backup chain may have a fixed length, and the data backup chain can record only a limited quantity of data copies. When the length of the data backup chain exceeds the fixed length, the storage device 100 deletes or integrates a data backup in the data backup chain, to reduce the length of the data backup chain.

In this case, the storage device 100 serves as a hardware device having a data storage function. A specific form of the storage device 100 is not limited in this embodiment of this application, for example, a hardware device such as a server, a computer, a laptop computer, or a mobile terminal.

At least one storage device 100 in the plurality of storage devices 100 can deploy the data access instance 200. In the data processing system, the data access instance 200 is an instance created by using data access as a main function, and the data access instance 200 is understood as a software module such as a virtual machine or a container. In this case, the storage device 100 serves as a hardware device having a data processing function. In this embodiment of this application, an operation that can be performed by the data access instance 200 is understood as an operation performed by the storage device 100 on which the data access instance 200 is located. A function of the data access instance 200 is understood as a function of the storage device 100 on which the data access instance 200 is located.

In this embodiment of this application, one storage device 100 can have a data storage function, in other words, can store a data copy. The storage device 100 can further have a data processing function, in other words, a data access instance may be deployed on the storage device 100.

In terms of structure, regardless of a form used by the data access instance 200, the data access instance 200 includes a processing module 210 and storage space 220.

The processing module 210 is configured to implement main functions of the data access instance 200, such as data access (in other words, processing a data access request), a data backup, data disaster recovery, data tiering, and data analysis. The processing module 210 may be a virtual processor or a module virtualized by a processor, and the processing module 210 may alternatively be a hardware component such as a processor.

The storage space 220 is a module configured to store data in the data access instance 200, and the "storage space 220" is a module on which the data access instance 200 can directly read and write data. The storage space 220 may be a storage component such as a memory, a hard disk drive, or a disk of the storage device 100 on which the data access instance 200 is located. The storage space 220 may alternatively be storage software used to store data, such as a file system deployed on the storage device 100 on which the data access instance 200 is located. The storage space 220 may alternatively be storage software used to store data, such as a file system deployed on another storage device 100. Any software or hardware module that allows the data access instance 200 to directly access data is applicable to this embodiment of this application. Because the function of the data access instance 200 is understood as the function of the storage device 100 on which the data access instance 200 is located, the data access instance 200 is also understood as the storage space 220 of the storage device 100 on which the data access instance 200 is located.

In this embodiment of this application, when writing data, the processing module 210 preferentially writes the data into the storage space 220 of the data access instance 200. When reading data, the processing module 210 preferentially reads the data from the storage space 220 of the data access instance 200. If the data that needs to be read is not found in the storage space 220 of the data access instance 200, the processing module 210 reads the data from the data copy stored in the storage device 100.

In terms of function, for any data access instance 200, the data access instance 200 has a part or all of the following functions.

### Function 1: data access and data access request processing

The data access instance 200 can receive a data access request used to request to access data, and can further process the data access request, for example, access the data based on the data access request. In this embodiment of this application, the data access instance 200 supports data access requests of a plurality of protocols, in other words, the data access requests are generated based on different protocols. For example, the protocol includes but is not limited to: a portable operating system interface (portable operating system interface, POSIX) protocol, a network file system (network file system, NFS), a server message block (server message block, SMB) protocol, and a Hadoop distributed file system (hadoop distributed file system, HDFS) protocol.

A manner in which the data access instance 200 accesses the data based on the data access request varies with different types of the data access request. When the data access request is a data write request used to request to write data, the data access instance 200 writes the data into the storage space 220 of the data access instance 200 based on the data write request.

When the data access request is a data read request used to request to read data, if the data that needs to be read is located in the storage space 220 of the data access instance 200, the data access instance 200 reads the data from the storage space 220 of the data access instance 200, and feeds back the read data. If the data that needs to be read is located in the storage device 100, the data access instance 200 reads the data from the storage device 100, and feeds back the read data.

### Function 2: data backup

The data access instance 200 backs up the data in the storage space 220 of the data access instance 200 to the storage device 100, and data backed up by the data access instance 200 each time is stored in the storage device 100 as one data copy in the data backup chain.

The data access instance 200 performs the data backup in a part or all of the following manners.

### Manner 1: full backup

The full backup means that the backed-up data is all data in the storage space 220 of the data access instance 200. In other words, data backed up by the data access instance 200 each time is all the data in the storage space 220 of the data access instance 200. Any data copy in the data backup chain is all data in the storage space 220 of the data access instance 200 at backup time of the data copy.

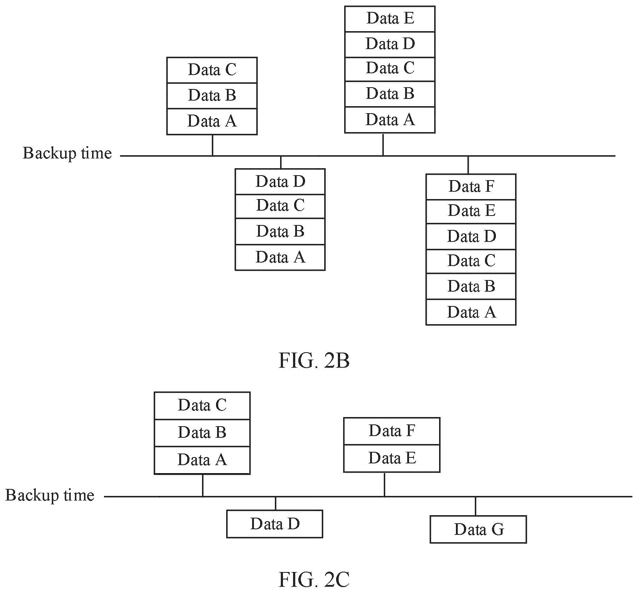

FIG. 2B is a diagram of an example of a structure of a data backup chain in a case of the full backup. It can be learned from FIG. 2B that, as the backup time moves, data in the first backup in FIG. 2B includes data A, data B, and data C, data in the second backup includes data A, data B, data C, and data D, data in the third backup includes data A, data B, data C, data D, and data E, and data in the fourth backup includes data A, data B, data C, data D, data E, and data F. Data in a data copy that is backed up in the storage device 100 each time increases, and the data backed up each time further includes data backed up last time.

### Manner 2: incremental backup

The incremental backup means that the backed-up data is only added data that is newly written into the storage space 220 after a previous backup. The data access instance 200 only needs, to the storage device 100 each time, to back up the data written into the storage space 220 after the previous backup. Any data copy in the data backup chain is data written into the storage space 220 between backup time of the data copy and backup time of a previous data backup.

FIG. 2C is a diagram of an example of a structure of a data backup chain in a case of the incremental backup. It can be learned from FIG. 2C that, as backup time moves, data in the first backup in FIG. 2B includes data A, data B, and data C, data in the second backup includes data D, data in the third backup includes data F and data E, and data in the fourth backup includes data G. Data included in the data copy backed up to the storage device 100 each time is data different from data in a previous backup.

The data access instance 200 may perform the data backup in any one of the foregoing manners, or may perform the data backup in a manner combining the two manners. For example, the data access instance 200 may perform the data backup in the full backup manner when performing the data backup for the first time, and perform the data backup in the incremental backup manner when performing the data backup subsequently.

### Function 3: data disaster recovery

If a data access instance 200 in the data processing system is faulty, in other words, the data access instance 200 cannot process the data access request, another data access instance 200 in the data processing system may replace the faulty data access instance 200 to implement the data access function, and process the data access request, in other words, implement the function 1. The another data access instance is referred to as a disaster recovery instance. Certainly, the another data access instance 200 may implement the function 2, and the another data access instance 200 backs up data in storage space 220 of the another data access instance 200 to the storage device 100.

### Function 4: data tiering

One of manners for the data tiering is tiering based on cold and hot degrees. For any data access instance 200, data stored in storage space 220 of the data access instance 200 is data that may be subsequently accessed, and data access frequency of the data in the storage space 220 is different. Some data is frequently accessed in a specific time period, but some data is rarely accessed or even not accessed in a specific time period. In this embodiment of this application, to effectively use space of the storage space 220, some data (high-level data) with high data access frequency is stored in the storage space 220 of the data access instance 200. For some data (low-level data) with low data access frequency, because this type of data is backed up to the storage device 100 as a part of the data copy, the storage space 220 does not retain this type of data, but stores only location information of the type of data. The location information of the type of data indicates a storage location of this type of data in the storage device 100.

In this embodiment of this application, based on data access frequency, data is tiered into hot data (the hot data is frequently accessed data, for example, data access frequency of the hot data is greater than a threshold), warm data (data access frequency of the warm data is lower than the data access frequency of the hot data, for example, the data access frequency of the warm data is greater than zero and less than the threshold), and cold data (the cold data is rarely accessed data, for example, data access frequency of the cold data is equal to zero). It should be noted that a manner of tiering data into hot data, warm data, and cold data herein is used as an example. During actual application, tiering at a finer granularity or a coarser granularity is allowed based on the data access frequency. In addition to tiering based on the cold and hot degree of data, there is another tiering manner, for example, tiering based on a data type, where audio data and video data are tiered into different levels, and a level of the audio data is higher than that of the video data; or tiering based on a level of a user, a level of data of a VIP user is higher than a level of data of a common user. In the three examples, tiering based on the cold and hot degree of the data usually uses a block (block) as a tiering granularity, and a granularity of a file or an object is not excluded; tiering based on the audio and video data uses a file as a granularity; and tiering based on the VIP user and the common user uses a user as a granularity, and data generated by the user is tiered.

When the cold data exists in the storage space 220 and the cold data is already included in the data copy backed up to the storage device 100, the data access instance 200 deletes the cold data in the storage space 220. The data access instance 200 stores location information of the cold data in the storage space 220. When finding that the warm data exists in the storage space 220, the data access instance 200 deletes the warm data, and stores location information of the warm data.

When the cold data is converted into the hot data in the storage space 220, the data access instance 200 restores the data in the storage space 220 by using the cold data that is already backed up to the data copy in the storage device 100. The data access instance 200 obtains the cold data from the storage device 100 based on the stored location information of the cold data, stores the cold data (in this case, the cold data has been converted into the hot data), and deletes the location information of the cold data. When finding that the warm data is converted into the hot data in the storage space 220, the data access instance 200 restores the data in the storage space 220 by using the warm data that is already backed up to the data copy in the storage device 100. The data access instance 200 obtains the warm data from the storage device 100 based on the stored location information of the warm data, stores the warm data, and deletes the location information of the warm data.

### Function 5: data analysis

The data access instance 200 performs an analysis operation on the data copy stored in the storage space 220 or the storage device 100. The analysis operation in this embodiment of this application includes but is not limited to: query and statistics collection.

Query: The data access instance 200 queries the data in the storage space 220 or the data copy stored in the storage device 100 for data that meets a condition. For example, the data access instance 200 queries the data in the storage space 220 for a file with a same or similar file name. For another example, if a current version of a file A.txt in the storage space 220 is deleted by mistake, the data access instance 200 queries the data in the storage space 220 to determine whether there is a historical version of the file A.txt, and restores the historical version of the file A to the current version.

Statistics collection: The data access instance 200 collects, through statistics, data that meets a condition from the data in the storage space 220 or the data copy stored in the storage device 100. For example, the data access instance 200 collects, through statistics, files in the storage space 220 based on a file size or a file type. For example, when a high capacity is occupied in the storage space 220, the data access instance 200 collects, through statistics, a file created by each user, to subsequently optimize a capacity of the storage space 220.

The following describes, with reference to the accompanying drawings, a manner in which the data access instance 200 implements the foregoing functions (which may also be understood herein as that the storage device 100 on which the data access instance 200 is deployed implements the foregoing functions) in this embodiment of this application.

### (1) Data access and data backup

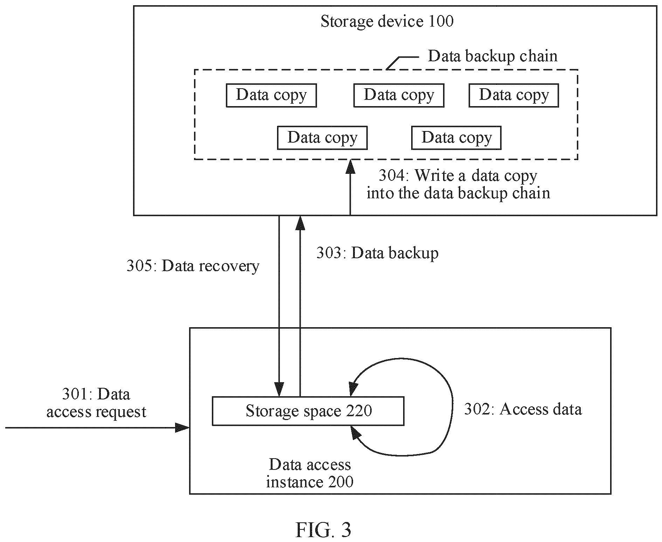

FIG. 3 shows a data processing method according to an embodiment of this application. The method includes the following steps.

Step 301: A data access instance 200 receives a data access request, where the data access request is used to request to access data.

When a user needs to access the data, the user triggers generation of the data access request, and the data access instance 200 receives the data access request.

When the data access instance 200 is deployed on a storage device 100 on a user side, the user operates the storage device 100. For example, the user performs an operation on an input/output device (such as a keyboard, a mouse, or a display screen) connected to the storage device 100, to view a file, enter data, or transfer a file. After the storage device 100 detects the operation of the user, the data access request is generated. The data access instance 200 deployed on the storage device 100 obtains the data access request.

When the data access instance 200 is deployed on a cloud storage device 100, the user establishes a connection to a cloud data access instance 200 by using a client deployed on the user side. For example, the user operates the client to view a file, enter data, or transfer a file. After the client detects the operation of the user, the data access request is generated. The data access request carries a logical address of the data that the user needs to access. The client sends the data access request to the cloud data access instance 200.

In this embodiment of this application, the data access request includes a data read request and a data write request. The data read request is used to request to read data, the data read request carries a logical address of the data, and the data that the data read request is used to request to read is data stored at the logical address. The data write request is used to request to write data, the data write request carries a logical address of the data and the data that needs to be written, and the data write request is used to request to store, at a location indicated by the logical address, the data that needs to be written.

It should be noted that a specific form of data access is not limited in this embodiment of this application. For example, the data access may be performed based on a block level (block level) (in this case, data storage forms of data in storage space 220 and a data copy in a data backup chain are block storage), or may be performed based on a file level (file level) (in this case, the data storage forms of the data in the storage space 220 and the data copy in the data backup chain are file storage), or may be performed based on an object level (object level) (in this case, the data storage forms of the data in the storage space 220 and the data copy in the data backup chain are object storage). Information carried in the data access request varies with specific forms of the data access.

For block-level-based data access, the data write request carries the data that needs to be written, a logical unit number (LUN), a logical block addressing (LBA), and a data length. The data read request carries a logical unit number, a logical block number, and a data length of data that needs to be read. The logical unit number, the logical block number, and the data length are understood as logical addresses of the data.

For file-level-based data access, the data write request carries the data that needs to be written, a file path, and an offset, where the file path is a string of characters that point to a file upwards by level from a root directory. The offset indicates an offset, in the file, of the data that needs to be written. The data read request carries a file path and an offset of the data that needs to be read, where the offset indicates an offset, in the file, of the data that needs to be read. The file path and the offset are essentially understood as logical addresses of the data, in other words, the file path and the offset have a same function as the logical address of the data, and are a main basis of the data access.

For object-level-based data access, the data write request carries the data that needs to be written, an object identifier, and an offset, where the object identifier is a unique identifier of an object. The offset indicates an offset, in the object, of the data that needs to be written. The data read request carries an object identifier and an offset of the data that needs to be read, where the offset indicates an offset, in the object, of the data that needs to be read. The object identifier and the offset are essentially understood as logical addresses of the data, in other words, the object identifier and the offset have a same function as the logical address of the data, and are a main basis of the data access.

Step 302: The data access instance 200 accesses the data in the storage space 220 of the data access instance 200 based on the data access request.

After obtaining the data access request, the data access instance 200 processes the data access request, and accesses the data in the storage space 220 based on data carried in the data access request.

In this embodiment of this application, the data access is mainly an operation that needs to be performed based on the data access request after the data access request is received.

When the data access request is the data write request, the data access instance 200 stores, in the storage space 220, the data that needs to be written. A location that is of the data that needs to be written and that is in the storage space 220 is the location indicated by the logical address carried in the data write request.

When the data access request is the data read request, the data access instance 200 queries the storage space 220 for data based on the logical address of the data carried in the data read request. If data stored at the logical address is the data that needs to be read, the data access instance 200 directly obtains the data, and feeds back the data to the user. If no data is stored at the logical address, the storage space 220 retains location information of the data that needs to be read, and the data access instance 200 obtains the data from the storage device 100 based on the location information of the data, and feeds back the data to the user after obtaining the data.

Step 301 and step 302 are a process in which the data access instance 200 processes the data access request. In addition to processing the data access request, the data access instance 200 can periodically or aperiodically perform a data backup. For details, refer to step 303 and step 304.

Step 303: The data access instance 200 backs up the data in the storage space 220 to the storage device 100. The data access instance 200 initiates a backup request to a storage device 200, where the backup request is used to request the storage device 100 to back up the data in the storage space 200. The backup request carries the data in the storage space 220 of the data access instance 200, that is, the data backed up by the data access instance 200.

Herein, periodic data backup is used as an example for description. The data access instance 200 performs the data backup spontaneously at a same interval. When backup time arrives, the data access instance 200 sends the backup request to the storage device 200, and sends the data in the storage space 220 to the storage device 100. If the data access instance 200 performs the data backup in a full backup manner, when the backup time arrives, the data access instance 200 sends all data in the storage space 220 to the storage device 100 by using the backup request. If the data access instance 200 performs the data backup in an incremental backup manner, when the backup time arrives, the data access instance 200 sends, to the storage device 100 by using the backup request, data newly written in the storage space 220 after a previous data backup.

Aperiodic data backup means that the data access instance 200 performs the data backup at different intervals. For example, a plurality of pieces of backup time within one day are preconfigured on a side of the data access instance 200, and intervals between the plurality of pieces of backup time are different. The data access instance 200 performs the data backup for one time when one piece of backup time arrives. For another example, the data access instance 200 passively performs the data backup when triggered by the user. For example, when the user needs to perform the data backup, the user sends a backup request to the data access instance 200, to request the data access instance 200 to perform the data backup.

It should be noted that, when the data in the storage space 220 is backed up to the storage device 100, the data access instance not only backs up the data stored in the storage space 220, but also backs up metadata of the data and the data together to the storage device 100. The metadata of the data is description information about the data. For example, the metadata of the data records a logical address of the data and modification information of the data.

Herein, that the data in the storage space 220 is stored in the file storage manner is used as an example. When the data access instance 200 performs the data backup, in addition to a backup file, metadata of a file system is also backed up. The metadata of the file system describes a hierarchical relationship between directories in the file system and description information (for example, information such as a file iNode) about a file.

Step 304: After receiving the backup request from the data access instance 200, the storage device 100 adds, as the data copy to the data backup chain, the data backed up by the data access instance 200.

When writing, into the data backup chain, the data backed up by the data access instance 200, the storage device 100 further marks backup time of the backed-up data. The backup time may be included in the backed-up data by the data access instance 200, or may be determined by the storage device 100 based on time at which the backup is received.

It should be noted that the data backup chain describes only a manner of establishing the data copy, in other words, data copies are established in a backup time sequence. A storage form of the data backup chain in the storage device 100 is not limited in this embodiment of this application. For example, the data backup chain in the storage device 100 is stored in a form of a folder, the folder includes a plurality of files, one file is one data copy, and the file further marks backup time of the data copy.

Step 305: The data access instance 200 recovers damaged or lost data in the storage space 220 by using the data copy in the data backup chain in the storage device 100. For example, when the data in the storage space 220 of the data access instance 200 is damaged, the data access instance 200 sends a data request to the storage device 100. The data request is used to request to obtain the damaged data from the storage device 100. The data access instance 200 recovers the data in the storage space 220 by using the obtained data. For another example, when the data in the storage space 220 of the data access instance 200 is lost, the data access instance 200 sends a data request to the storage device 100. The data request is used to request to obtain the lost data from the storage device 100. The data access instance 200 recovers the data in the storage space 220 by using the obtained data.

Herein, that data is damaged is used as an example for description. The data access instance 200 finds that the data in the storage space 220 is damaged, for example, the data access instance 200 finds that the data is incomplete or the data has garbled characters. If the data access instance 200 performs the data backup in a full backup manner, the data access instance 200 obtains, from the storage device 100 by using the data request, a data copy that is backed up last time in the data backup chain in the storage device 100. After obtaining the data copy, the data access instance 200 obtains complete data corresponding to the damaged data from the data copy, and replaces the damaged data with the complete data. The data access instance 200 directly obtains, by using the data request, the complete data corresponding to the damaged data from the data copy that is backed up last time in the data backup chain, and then replaces the damaged data with the complete data. If the data access instance 200 performs the data backup in an incremental backup manner, the data access instance 200 first determines time when the damaged data is written into the storage space 220, and calculates backup time of the damaged data based on the time when the damaged data is written into the storage space 220. The backup time of the damaged data is usually time of a latest backup after the damaged data is written into the storage space 220, the data access instance 200 obtains, from the data backup chain in the storage device 100 by using the data request, a data copy at the backup time or complete data corresponding to the damaged data in the data copy at the backup time, and then recovers the lost data in the storage space 220 by using the obtained data.

A data recovery manner in a case of data loss is similar to a data recovery manner in a case of data damage. For details, refer to the foregoing descriptions, and details are not described herein again.

### (2) Data disaster recovery

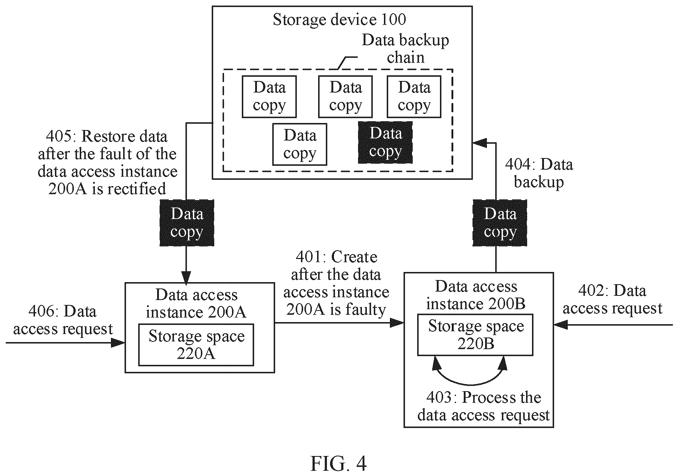

FIG. 4 shows a data processing method according to an embodiment of this application. For ease of description, two data access instances 200 in the data processing method are respectively referred to as a data access instance 200A and a data access instance 200B. The method includes the following steps.

Step 401: When the data access instance 200A is faulty, create the data access instance 200B, and use the data access instance 200B as a disaster recovery instance.

When the data access instance 200A is faulty (for example, a device in which the data access instance 200A is located is interrupted, or a fire occurs), the data access instance 200A cannot continue processing a data access request. To continue processing the data access request, the data access instance 200B is created. A manner of creating the data access instance 200B is not limited in this embodiment of this application. For example, a monitoring module is deployed in the data processing system, and the monitoring module monitors a status of the data access instance 200 in the data processing system. If the monitoring module determines that the data access instance 200A is faulty, the monitoring module creates the data access instance 200B. For another example, background operation and maintenance personnel monitors the status of the data access instance 200, and after the data access instance 200A is determined to be faulty, the operation and maintenance personnel manually creates the data access instance 200B.

Step 402: The data access instance 200B replaces the data access instance 200A to receive the data access request.

Step 403: The data access instance 200B processes the data access request. For example, the data access instance 200B reads data in a storage device 100 based on the data access request, or the data access instance 200B writes data into storage space 220B based on the data access request.

When the data access request is a data write request, the data access instance 200B stores, in the storage space 220B of the data access instance 200B, the data that needs to be written. A location of the data that needs to be written and that is in the storage space 220B is a location indicated by a logical address carried in the data write request.

When the data access request is a data read request, the data access instance 200B queries the storage space 220B for data based on a logical address of data carried in the data read request. If the data is not found, the data access instance 200B requests data in a data copy from the storage device 100 based on the logical address. The storage device 100 feeds back the data to the data access instance 200 upon request of the data access instance 200B. After obtaining the data from the storage device 100, the data access instance 200 feeds back the data to a user. If the data is found, the data access instance 200B directly obtains the data from the storage space 220B, and feeds back the data to the user.

Herein, an example in which the data in the storage space 220B is stored in a file storage manner is used, where the data write request carries the data that needs to be written, a file path, and an offset. The data access instance 200B finds, based on the file path, a file into which the data needs to be written, and writes, into the file based on the offset, the data that needs to be written. The data read request carries a file path and an offset of data that needs to be read. The data access instance 200B queries the storage space 220 for a file based on the file path. If the file is not found, the data access instance 200B requests the data in the data copy from the storage device 100 based on the file path. After obtaining the data from the storage device 100, the data access instance 200B feeds back the data to the user. If the file is found in the storage space 220B, the data access instance 200B directly obtains the data from the file based on the offset, and feeds back the data to the user.

It can be learned from the foregoing descriptions that a manner in which the data access instance 200B processes the data access request is similar to a manner in which the data access instance 200 processes the data access instance 200 in step 302. A difference lies in that, in step 302, the data access instance 200 stores data in the storage space 220, when processing the data access request, the data in the storage space 220 is preferentially accessed; and data needs to be obtained from the storage device 100 only when the storage space 220 does not store the data (for example, only stores location information of the data). However, in step 403, because the storage space 220B of the data access instance 200B does not store all data in storage space 220A of the data access instance 200A, when the data read request is processed, there may be a case in which the data cannot be found in the storage space 220B. In this case, the data access instance 200B needs to access the data copy in the storage device 100 based on the data access request.

Step 404: The data access instance 200B backs up the data in the storage space 220B to the storage device 100.

It can be learned from step 403 that the data access instance 200B writes the data into the storage space 220B of the data access instance 200B, and the data access instance 200B performs data backup in a manner similar to that in step 303. For the manner of performing the data backup by the data access instance 200B, refer to related descriptions of step 303. Details are not described herein again.

Step 405: After the fault of the data access instance 200A is rectified, the data access instance 200A obtains, from the storage device 100, the data backed up by the data access instance 200B, and restores the data in the storage space 220A.

The data access instance 200A obtains, from a data backup chain of the storage device 100, the data backed up by the data access instance 200B. If the data access instance 200B uses a full backup manner, the data access instance 200A obtains a data copy backed up by the data access instance 200B last time in the data backup chain, and the data access instance 200A obtains the data copy and stores the data copy in the storage space 220A of the data access instance 200A, to restore the data in the storage space 220A. If the data access instance 200B uses an incremental backup manner, the data access instance 200A obtains all data copies backed up by the data access instance 200B in the data backup chain, and the data access instance 200A obtains all the data copies backed up by the data access instance 200B and stores all the obtained data copies in the storage space 220A of the data access instance 200A, to restore the data in the storage space 220A.

Step 406: The data access instance 200A continues to process the data access request, and the data access instance 200B stops processing the data access request.

After the data access instance 200A restores the data in the storage space 220A, the data access instance 200A continues to process the data access request.

### (3) Data tiering

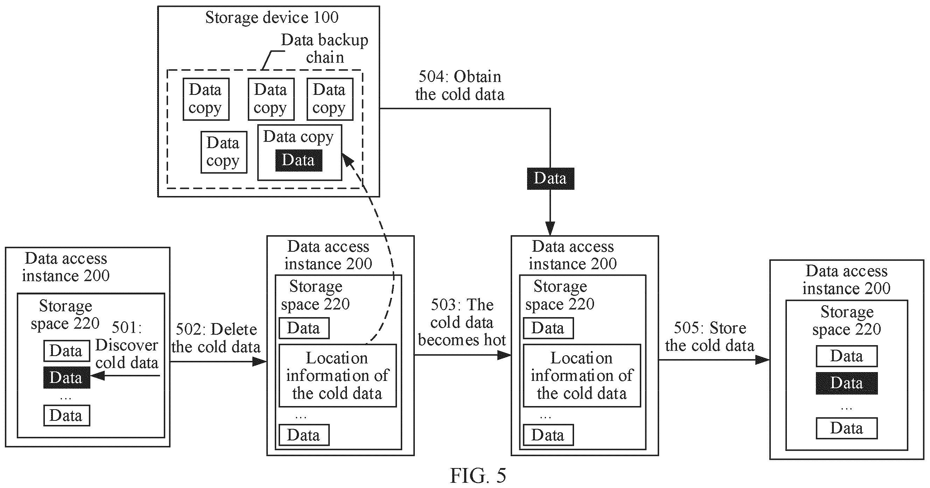

FIG. 5 shows a data processing method according to an embodiment of this application. In the method, cold data and hot data are used as examples for description. The method includes the following steps.

Step 501: A data access instance 200 discovers that the cold data exists in storage space 220.

The data access instance 200 monitors data access frequency of data in the storage space 220. When it is found that data access frequency of some data in the storage space 220 is reduced, for example, data access frequency of data is already less than or equal to data access frequency of the cold data, the data becomes the cold data.

Step 502: The data access instance 200 deletes the cold data in the storage space 220. The data access instance 200 stores location information of the cold data in the storage space 220. The location information of the cold data indicates a storage location of the cold data in a storage device 100.

When the cold data exists in the storage space 220, the data access instance 200 first determines the location information of the cold data. If the data access instance 200 uses a full backup manner when performing data backup, the data access instance 200 determines a data copy backed up last time in a data backup chain of the storage device 100. The storage location of the cold data in the data copy in the storage device 100 is the location information of the cold data. If the data access instance 200 uses an incremental backup manner when performing data backup, the data access instance 200 determines time at which the cold data is written into the storage space 220, and queries the data backup chain of the storage device 100 for a data copy backed up last time after the cold data is written into the storage space 220. The storage location of the cold data in the data copy in the storage device 100 is the location information of the cold data.

The data access instance 200 obtains the location information of the cold data, deletes the cold data cached in the storage space 220, and retains the location information of the cold data.

Step 503: The data access instance 200 determines that the cold data is converted into the hot data.

As the data access instance 200 monitors the data access frequency of the data in the storage space 220, it may be found that data access frequency of some cold data in the storage space 220 increases, and the data access frequency of the cold data is already greater than or equal to data access frequency of the hot data. The cold data becomes the hot data.

Step 504: The data access instance 200 obtains the cold data from the storage device 100 based on the location information of the cold data.

Step 505: The data access instance 200 deletes the location information of the cold data, and caches the cold data in the storage space 220.

After obtaining the cold data, the data access instance 200 writes the cold data into a location indicated by a logical address of the cold data, and deletes the location information of the cold data.

It should be noted that, in the embodiment shown in FIG. 5, a storage manner of the cold data and a storage manner of the hot data in data tiering are merely described as examples. For warm data, a storage manner similar to that of the cold data may be used. Local data that the storage space 220 can store and data with only location information stored in the storage space 220 may vary with data tiering manners in the data tiering. However, a principle of the data tiering is similar, in other words, in the data tiering, the storage space 220 of the data access instance 200 stores data with high data access frequency as much as possible, and for data with low data access frequency, the storage space 220 of the data access instance 200 stores only location information of the data. In this way, the storage space of the storage space 220 of the data access instance 200 can be effectively used, so that the data with the high data access frequency is stored in the storage space 220 as much as possible.

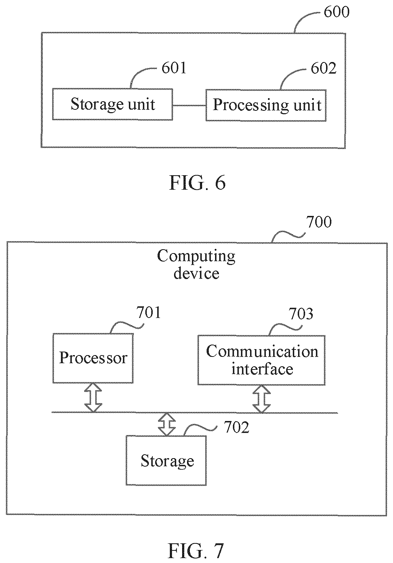

Based on a same inventive concept as the method embodiment, embodiments of this application further provide a storage apparatus. The storage apparatus is configured to perform the method performed by the storage device in method embodiments shown in FIG. 3 to FIG. 5. For related features, refer to the foregoing method embodiments. Details are not described herein again. As shown in FIG. 6, a storage device 600 includes a storage unit 601 and a processing unit 602.

The storage unit 601 is configured to store a data copy in a form of a data backup chain, where the data backup chain records, in a backup time sequence, data copies that are backed up in the storage device.

The processing unit 602 is configured to: under control of a first data access instance, back up data in storage space of the first data access instance to the storage device, where data backed up by the first data access instance each time is used as one data copy in the data backup chain; and when the first data access instance is faulty, feed back, to a second data access instance based on a request from the second data access instance, data backed up by the first data access instance to the storage device.

In a possible implementation, under control of the second data access instance, the processing unit 602 backs up data in storage space of the second data access instance to the storage device, where data backed up by the second data access instance each time is used as one data copy in the data backup chain.

In a possible implementation, when the data in the storage space of the first data access instance is damaged or lost, the first data access instance sends a data request to the storage device. The processing unit 602 feeds back the data in the data backup chain to the first data access instance upon request of the first data access instance. The first data access instance recovers the damaged or lost data in the storage space based on the data.

In a possible implementation, the data copy in the storage device is a part or all of the following.
(1) The first data access instance performs data backup by using an incremental backup.
   The data copy is data written into the storage space of the first data access instance after a previous backup.
(2) The first data access instance performs data backup by using a full backup.

The data copy is all data in the storage space of the first data access instance.

In a possible implementation, the storage device, the first data access instance, or the second data access instance uses a part or all of the following deployment manners.

The first data access instance is deployed on the storage device.

The second data access instance is deployed on the storage device.

It should be noted that, in this embodiment of this application, division into the units is an example, and is merely a logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of a software functional unit.

All or a part of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or a part of the procedures or functions according to embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive (solid-state drive, SSD).

In a simple embodiment, a person skilled in the art may figure out that a storage device in embodiments shown in FIG. 3 to FIG. 5 may be in a form shown in FIG. 7.

As shown in FIG. 7, a computing device 700 includes at least one processor 701, a storage 702, and optionally, a communication interface 703.

The storage 702 may be a volatile storage such as a random access storage. Alternatively, the storage may be a non-volatile storage such as a read-only storage, a flash storage, a hard disk drive (hard disk drive, HDD), a solid-state drive (solid-state drive, SSD) or a physical disk. Alternatively, the storage 702 is any other medium that can be used to carry or store expected program code in a form of instructions or a data structure and that can be accessed by a computer. However, this is not limited thereto. The storage 702 may be a combination of the foregoing memories.

In this embodiment of this application, a specific connection medium between the processor 701 and the storage 702 is not limited.

The processor 701 may be a central processing unit (central processing unit, CPU), or the processor 701 may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a discrete gate or a transistor logic device, a discrete hardware component, an artificial intelligence chip, a system-on-a-chip. The general-purpose processor may be a microprocessor, any conventional processor, or the like.

When communicating with another device, the processor 701 may perform data transmission through the communication interface 703, for example, receive a data request or a backup request from a data access instance.

When the storage device is in the form shown in FIG. 7, the processor 701 in FIG. 7 may invoke computer-executable instructions stored in the storage 702, to enable the computing device to perform the method performed by the storage device in any one of the foregoing method embodiments.

Specifically, functions/implementation processes of the storage unit and the processing unit in FIG. 6 may be implemented by invoking, by the processor 701 in FIG. 7, the computer-executable instructions stored in the storage 702. Alternatively, functions/implementation processes of the storage unit and the processing unit in FIG. 6 may be implemented by invoking, by the processor 701 in FIG. 7, the computer-executable instructions stored in the storage 702, and functions/implementation processes of receiving or sending of the processing unit in FIG. 6 may be implemented through the communication interface 703 in FIG. 7.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, an optical storage, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable storage that can indicate a computer or any other programmable data processing device to work in a specific manner, so that the instructions stored in the computer-readable storage generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, if the modifications and variations made to this application fall within the scope of the claims of this application and equivalent technologies thereof, this application is intended to cover these modifications and variations.

## Claims

1. A data processing system, wherein the system comprises:
a first storage device, configured to store a data copy in a form of a data backup chain, wherein the data backup chain records, in a backup time sequence, data copies that are backed up to the storage device; and
a second storage device, configured to receive a data access request, and access data in storage space of the second storage device based on the data access request, wherein
the second storage device is further configured to back up the data in the storage space of the second storage device to the first storage device, wherein data backed up by the second storage device each time is used as one data copy in the data backup chain; and
the data processing system further comprises a third storage device, wherein the third storage device is configured to: when the second storage device is faulty, replace the second storage device instance to process the data access request, and access the data copy in the storage device based on the data access request; or
the second storage device is further configured to: when low-level data in the storage space of the second storage device is already comprised in the data copy backed up to the first storage device, delete the low-level data in the storage space of the second storage device.

2. The system according to claim 1, wherein the third storage device is further configured to back up data in storage space of the third storage device to the first storage device, wherein data backed up by the third storage device each time is used as one data copy in the data backup chain.

3. The system according to claim 1 or 2, wherein the second storage device is further configured to: when the low-level data is converted into high-level data, restore the data in the storage space of the second storage device by using the low-level data backed up to the data copy in the first storage device.

4. The system according to any one of claims 1 to 3, wherein the second storage device is further configured to: when the data in the storage space of the second storage device is damaged or lost, obtain the data copy from the data backup chain, and recover the damaged or lost data by using the data copy.

5. The system according to any one of claims 1 to 4, wherein when backing up the data in the storage space of the second storage device to the first storage device, the second storage device is configured to:
back up the data in the storage space of the second storage device to the first storage device in a data increment manner, wherein data backed up each time is used as one data copy in the data backup chain; or
back up the data in the storage space of the second storage device to the first storage device in a full data manner, wherein data backed up each time is used as one data copy in the data backup chain.

6. The system according to any one of claims 1 to 5, wherein the first storage device, the second storage device, or the third storage device uses a part or all of the following deployment manners:
the second storage device and the first storage device are a same device; or
the third storage device and the first storage device are a same device.

7. The system according to any one of claims 1 to 6, wherein the data access request is based on a part or all of the following protocols: a portable operating system interface POSIX protocol, a network file system NFS, a server message block SMB protocol, and a Hadoop distributed file system HDFS protocol.

8. The method according to any one of claims 1 to 7, wherein the second storage device is further configured to:
obtain the backed-up data copy from the first storage device, and perform an analysis operation on the data copy, wherein the analysis operation comprises: query and statistics collection.

9. A data processing method, wherein the method comprises:
receiving, by a first data access instance, a data access request, and accessing data in storage space of the first data access instance based on the data access request; and
backing up, by the first data access instance, the data in the storage space of the first data access instance to a storage device, wherein the storage device stores a data copy in a form of a data backup chain, the data backup chain records, in a backup time sequence, data copies that are backed up to the storage device, and data backed up by the first data access instance each time is used as one data copy in the data backup chain; and
the data processing method further comprises a part or all of the following:
(1) when the first data access instance is faulty, replacing, by a second data access instance, the first data access instance to process the data access request, and accessing the data copy in the storage device based on the data access request; or
(2) when low-level data in the storage space of the first data access instance is already comprised in the data copy backed up to the storage device, deleting, by the first data access instance, the low-level data in the storage space of the first data access instance.

10. The method according to claim 9, wherein the second data access instance is further configured to back up data in storage space of the second data access instance to the storage device, wherein data backed up by the second data access instance each time is used as one data copy in the data backup chain.

11. The method according to claim 9 or 10, wherein the first data access instance is further configured to: when the low-level data is converted into high-level data, restore the data in the storage space of the first data access instance by using the low-level data backed up to the data copy in the storage device.

12. The method according to any one of claims 9 to 11, wherein the storage device, the first data access instance, or the second data access instance uses a part or all of the following deployment manners:
the first data access instance is deployed on the storage device; or
the second data access instance is deployed on the storage device.

13. The method according to any one of claims 9 to 12, wherein the data access request is based on a part or all of the following protocols: a portable operating method interface POSIX protocol, a network file method NFS, a server message block SMB protocol, and a Hadoop distributed file method HDFS protocol.

14. A data processing method, wherein the method is performed by a storage device, the storage device stores a data copy in a form of a data backup chain, the data backup chain records, in a backup time sequence, data copies that are backed up to the storage device, and the method comprises:
under control of a first data access instance, backing up data in storage space of the first data access instance to the storage device, wherein data backed up by the first data access instance each time is used as one data copy in the data backup chain; and
when the first data access instance is faulty, feeding back, to a second data access instance based on a request from the second data access instance, data backed up by the first data access instance to the storage device, wherein the second data access instance is a disaster recovery instance of the first data access instance.

15. The method according to claim 14, wherein the method further comprises:
under control of the second data access instance, backing up data in storage space of the second data access instance to the storage device, wherein data backed up by the second data access instance each time is used as one data copy in the data backup chain.

16. The method according to claim 14 or 15, wherein the method further comprises:
feeding back data in the storage device to the first data access instance upon request of the first data access instance.

17. The method according to any one of claims 14 to 16, wherein the data backed up by the first data access instance to the storage device each time is a part or all of the following:
all data in the storage space of the first data access instance; or
data written into the storage space of the first data access instance after a previous backup.

18. The method according to any one of claims 14 to 17, wherein the storage device, the first data access instance, or the second data access instance uses a part or all of the following deployment manners:
the first data access instance is deployed on the storage device; or
the second data access instance is deployed on the storage device.

19. A storage device, wherein the storage device comprises a storage unit and a processing unit;
the storage unit is configured to store a data copy in a form of a data backup chain, wherein the data backup chain records, in a backup time sequence, data copies that are backed up to the storage device; and
the processing unit is configured to: under control of a first data access instance, back up data in storage space of the first data access instance to the storage device, wherein data backed up by the first data access instance each time is used as one data copy in the data backup chain; and when the first data access instance is faulty, feed back, to a second data access instance based on a request from the second data access instance, data backed up by the first data access instance to the storage device.

20. The device according to claim 19, wherein the processing unit is further configured to:
under control of the second data access instance, back up data in storage space of the second data access instance to the storage device, wherein data backed up by the second data access instance each time is used as one data copy in the data backup chain.

21. The device according to claim 19 or 20, wherein the processing unit is further configured to:
feed back data in the storage device to the first data access instance upon request of the first data access instance.

22. The device according to any one of claims 19 to 21, wherein the data copy backed up by the first data access instance to the storage device each time is a part or all of the following:
all data in the storage space of the first data access instance; or
data written into the storage space of the first data access instance after a previous backup.

23. The device according to any one of claims 19 to 22, wherein the storage device, the first data access instance, or the second data access instance uses a part or all of the following deployment manners:
the first data access instance is deployed on the storage device; or
the second data access instance is deployed on the storage device.

24. A computing device, wherein the computing device comprises a processor and a storage, wherein the processor invokes computer-executable instructions in the storage to perform the method according to any one of claims 9 to 18.

25. A computer-readable storage medium, wherein the computer-readable storage medium stores computer-executable instructions, and the computer-executable instructions are for enabling a computer to perform the method according to any one of claims 9 to 18.
